# EUROPEAN PATENT APPLICATION

(11) **EP 2 952 651 A1**
(43) Date of publication of application: **09.12.2015**
(21) Application number: 14461537.4
(22) Date of filing: 03.06.2014
(51) Int. Cl.: E04F 15/18, E04F 15/02, F24D 3/14, E04F 15/10

(54) **Multi-layer floor covering**

(71) Applicant: Ocwieja, Jaroslaw, 60-184 Poznan (PL); Stachowicz, Jerzy, 30-150 Krakow (PL)
(72) Inventor: Ocwieja, Jaroslaw, PL 60-184 Poznan (PL); Stachowicz, Jerzy, PL 30-150 Kraków (PL)
(74) Representative: Sawicki, Igor

(57) **Abstract**

A multi-layer floor covering made up of inseparably joined together: secondarily foamed polyurethane foam (1), insulation foil (2), thermal insulation (3) and a hardened layer (6). An upper layer (7) is fastened to the upper surface of the hardened layer (6) through one of the wider surfaces of the upper layer (7) being spread with binding material (8) which also covers both surfaces of a membrane (9) in such a way that one side of the binding material is adhered to the bottom surface of the upper layer (7), while on the other, external side of the membrane, binding material is adhered to the upper surface of the hardened layer (6).

## Description

The invention relates to a multilayer floor covering, in particular designed for direct fitting on a floor raw concrete, or other permanent rough floor.

The known solutions in the domain of floors can be divided into three groups:
- parquet and solid floor board,
- parquet and two-layer board,
- three-layer parquet, e.g. "barlinek" type floor board

The solid parquet is produced from a uniform wooden element, and on principle is fitted with the tongue feather and feather key. Fitting consists in gluing of individual elements of parquet with the use of adhesive. Possible repair (replacement) of damaged element in the utilized floor consists in cutting out and detaching of damaged element from rough floor, which in consequence results in destroying the tongue feather and feather key in the adjacent elements of parquet. In many cases, the raw concrete is damaged as well, which makes the whole operation of replacement very costly and burdensome.

The two-layer parquet is built from the upper layer (deciduous lamella) as well as from bottom layer (coniferous lamellae). The upper lamella is glued for good with bottom lamellae, situated perpendicularly to it. The two-layer parquet, similarly like solid parquet, is glued for good to the rough floor. The replacement of damaged element results in the same problems, as in the case of solid parquet. The upper layer of two-layer parquet is not replaceable and its renovation takes place by scraping and secondary lacquering of the surface.

The three-layer parquet is built of three layers, out of which, the upper layer is made up from deciduous lamella, the middle layer is made up from coniferous lamella or ply-wood, or HDF (high density fiberboard), whilst the bottom layer is made up from deciduous or coniferous face veneer. All three layers are glued each with another for good. Example of such solution is presented in the patent description PL 204522.

The three-layer parquet can be fitted with glue, by bonding it with raw floor, or else laid as floating one. In the case of laying it with glue, the three-layer parquet features the usable characteristics similar to that of two-layer parquet. In the case of laying it by floating method, the possible repair of damaged element is possible only then, when the parquet is fitted with glue-less locking, and repair consists in dismantling the floor, starting from the wall, up to the damaged element. The three-layer parquet, which was laid as floating one, after relatively short period of use (one heating period), when walking on it begins to creak, which is caused by sensitiveness of wood for the change in humidity. This method of parquet fitting, when walking on it, is causing also the effect of stepping (loud knocking), which is very bothersome for the user. Using of layer parquets for floor heating is characterized by restrictive limitations. The temperature reached by parquet cannot exceed 27 °C (81 °F), because when it is exceeded, the parquet may get unglued (delaminating of the upper or bottom layer), moreover the humidity of air in the room can not be higher than 70% and lower than 40%. Known also are the floor heating panels type SpeedUp from Danfoss Company, "dry" laid on supporting layer, such as concrete. The panels are supplied as an EPS/Styrofoam boards, along with glued on them heat distributing panels made of aluminum. This solution is burdened with a number of drawbacks, inter alia consisting in the following:
- these are made of uniform rigid material, which in order to ensure correct assembly results in necessity of having very even rough floor,
- heavy aluminum screen, which is permanently glued with the whole panel,
- high thermal inertia of the system.

The multi-layer floor covering according to the invention is characterized in that it is made up by inseparably joined together: secondarily foamed polyurethane foam, insulation foil, thermal insulation and hardened layer, whilst the upper layer is fastened to the upper surface of hardened layer; at the same time one of the wider surfaces of top layer is spread with biding material which is bilaterally spread over the surface of membrane in such a way, that one side of binding material is adhering to the bottom surface of surface layer 7, while on the other, external side of membrane binding material is adhering to the upper surface of hardened layer.

It is preferable, that the feather key for the tongue feather is situated within the thermal insulation.

It is preferable, that the feather key for the tongue feather is situated within the hardened layer.

It is preferable, that on the external side of foil, binding material is shielded with a protective paper, which is removed prior to fitting.

It is preferable, that the thermal insulation has a milled spaces, which are housing installation pipes with a liquid, and which are resting directly on the holding down foam, laid directly on the hardened layer, of the thermal insulation. Then the heating panel is fixed by means of binding material to the upper surface of hardened layer, and on the top of it, the surface layer is fixed by means of binding material.

It is preferable, that the hard panel is provided with feather key for tongue feather, heating panel, surface layer, as well as pipe connectors, passing right through the hard panel and connecting heating panel with the source of heat.

It is preferable, that the external lateral surfaces of mutually joined: secondarily foamed polyurethane foam, insulation foil, thermal insulation with feather key for tongue feather, as well as hardened layer are covered with water-repellant coating.

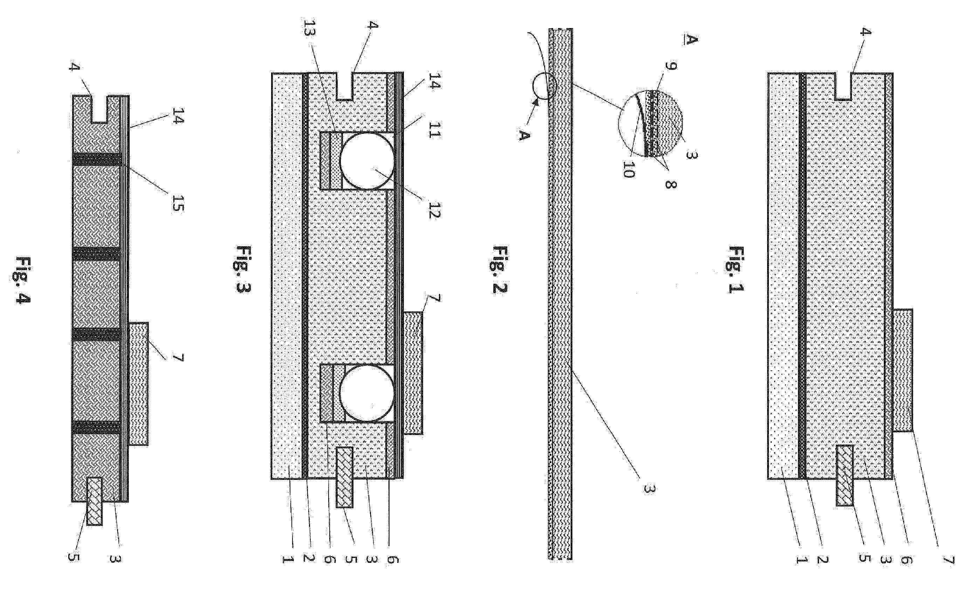

The subject of invention is shown in the embodiments, as presented in the drawing, in which: fig. 1 depicts a section of multilayer floor covering without floor heating, fig. 2 depicts a section of the top layer, along with enlargement of section A clipping shown, fig. 3 depicts the section of floor covering fitted with a floor heating installation mounted inside of it, whilst fig. 4 depicts a section of multilayer floor covering designed for already existing floor heating.

The multilayer floor covering according to invention is composed of a secondarily foamed polyurethane 1, insulating foil 2, and thermal insulation 3 with feather key 4 for a tongue feather 5, hardened layer 6 and surface layer 7.

There is also a possibility to place a feather key 4 for a tongue feather 5 in the hardened layer 6.

The secondarily foamed polyurethane foam 1, insulating foil 2, thermal insulation 3 as well as hardened layer 6 constitute a monolithic structure, hereinafter referred to as "sandwich", in which individual elements are inseparably connected to each other.

Characteristic feature of the surface layer 7 is, that one of its wider surfaces is spread with binding material 8, which is the glue bilaterally spread over the surface of membrane 9; which can be made of foil, micro fiber, paper, in such a way, that one side of binding material 8 is adhering to the bottom face of surface layer 7, while on the other, external side of membrane 9, binding material 8 is shielded by protective paper 10, which is removed prior to fitting, owing to which after fitting, the binding material 8 is adhering to the external surface of a "sandwich".

The other one of wider planes of the surface layer 7 is in a raw, grinded condition, or else finished with a lacquer or oil. Prepared this way, upper layer 7 enables it to be fitted on a smooth surface without necessity of spreading the binding material during the process of fitting. This type of surface layer retains its geometry much longer than surface layer, which is devoid of surface finish and binding material.

Individual ,sandwiches" are laid directly on a hard rough floor without use of glue, and are joined by means of tongue feather 5 and feather key 4. The tongue feather 5 has glue applied on it, which is bonding it with a feather key 4. In addition, the glue is applied onto the lateral surfaces of "sandwich", above the tongue feather 5 fixed in the feather key 4. Being fitted surface layer 7 can earlier be subjected to a surface finish, or else be fitted in a raw condition, whilst finishing operation is done after its fitting.

The surface layer 7 can be in a form of lamella made of deciduous or coniferous wood, having its thickness from 1 mm up to 7 mm, width from 40 mm up to 450 mm and length from 160 mm up to 6,500 mm.

Surfaces the "sandwich" are covered with water-repellent coating, which ensures their resistance to the changes of moisture.

Such solution features many advantages, consisting in the following benefits:
- "sandwiches" are fitted each with another by means of tongue feather-feather key; "sandwich" system does not require gluing to the raw floor (floating system, glue-less),
- repair of individual elements of the surface layer takes place without necessity of dismantling of whole or part of the floor (guarantee of a low cost possible repair),
- at the moment of renovation, the system enables sticking of a new surface directly onto the floor, which is subjected to renovation (this method of renovation is the cheapest, dust-free renovation and does not require the use of scraping machines),
- the floor covering is ready for use directly upon its fitting,
- the floor covering, owing to permanent joining of foil and polyurethane foam with hardened layer, is characterized by significantly smaller "effect of stepping" as compared with other available on the market floating floors,
- structure of floor covering enables changing of "sandwich" thickness, which allows for facing of pavement layers with different thickness, without necessity to interfere in the levels of raw concretes,
- contrary to other multi-layer floors, there is no need for using the presses (hot or cold) for the production of floor covering, which results in significantly lower production costs,
- as opposed to available on the market multi-layer parquets, which require mutual joining of individual elements with the use of tongue feather and feather key, or oil-free lock (the specific quality of these floors consist in the fact, that every element is individually processed by bestowing it with the tongue feather and feather key, or else with the oil-free lock), in the case of floor covering according to invention, the tongue feather and feather key are bestowed to the base of "sandwich", which on its surface has no surface layer. Upon mutual joining of "sandwiches", an uniform, even and stable surface is obtained, which then is fitted with a thin surface layer (wooden lamella), having unrestricted width and length within the limits of connected "sandwiches". Fitted surface layer has neither tongue feather nor feather key, which enables disassembly of any surface layer without interfering into the neighboring layers. The binding material, used for joining surface layers with the base of "sandwich", has in its structure an ultra-thin membrane (in a form of foil, micro fiber, paper), which in the case of necessity of dismantling the surface layer, enables disassembly without inflicting essential damage to the surface of "sandwich" base.

Another example of embodiment, according to the invention, is a multilayer floor covering with a floor heating system built-in within its structure, and which is characterized by the fact, that the thermal insulation 3 features a milled spaces 11, which are housing the installation pipes 12 filled with a liquid (heat emitters), and which are resting directly on the holding down foam 13, laid directly on the hardened layer 4, of thermal insulation 3. After fitting of installation pipes 12, the "sandwich" is covered by heating panel 14. The heating panel 14 is connected with the "sandwich" by means of binding material 8, which is applied to the upper part of hardened layer 4 between milled spaces 11. After fitting the heating panel 14, any decorative surface layer 7 (wooden lamella, ceramics, granite, marble, floor covering) is glued to its surface.

In order to improve the thermal properties, both the installation pipes 12, as well as bottom part of the heating panel 14 should be covered with the black, matt coat (paint).

The covering according to the above-mentioned embodiment of invention is designed for installation on the raw concrete, which within its structure is free from any floor heating, and is featuring the following advantages:
- in connection with a low thermal inertia of the system, one can freely program the temperature in the individual rooms, or else in the individual sections in given room,
- installation pipes can be connected with the existing conventional heating system (wall-mounted heaters) by means of pipe connectors.
- 1sq.m. of the floor covering according to invention is significantly lighter than 1 sq.m. of conventional heating with jointless floor raw concrete, or other wet raw concrete,
- good thermal permeability, as well as low thermal inertia of the floor covering according to invention results in a lower demand for thermal energy, as delivered by means of a liquid agent, which as a consequence, results in a lower consumption of gas or electric energy for system operation,
- for the regions, with the occurrence of air and foundation humidity higher than customary, the "sandwich" layers are impregnated with bitumen, which makes them waterproof,
- the plane obtained owing to the stable connection of heating panel with the hard layer of "sandwich", enables the use of a thin, surface decorative layer, wooden or laminated, with the thickness of e.g. 2mm, which results in significant savings in the material, i.e. much less of wood raw material is used for its production than in the case of production of the standard parquets with the thickness of 8-22 mm,
- binding material used between the surface layer and heating panel, owing to the used ultra-thin membrane (foil, micro fiber, paper) held in its structure, enables dismantling of a surface layer without causing a losses in the heating panel of "sandwich",
- the floor covering provides possibility of using any surface layer on the heating - panel (wood, ceramics, stone, floor covering),
- the floor covering, owing to its structure can be safely heated up to temperature significantly higher than in the case of traditional floor heating (range of safe operation of the product from -20 up to +40ºC ),
- the cost of production and fitting of the floor covering, is significantly lower than the cost of production and fitting of traditional floor heating.

Another example of implementation of the solution according to invention is a multi-layer floor covering, designed for direct fitting on the floor, already having within its structure the floor heating system. It is characterized by the fact, that it consists of: hard panel 6 fitted with feather key 4 for tongue feather 5, heating panel 14 (of aluminum, duralumin or other thermal conductor), surface layer 7 as well as pipe connectors 15 (made of aluminum or duralumin, or other thermal conductor), passing right through the hard panel 6, and connecting heating panel 14 with the source of heat.

Similarly, like in the previous examples of embodiment according to invention, the remaining "sandwiches" are laid directly on hard rough floor, and connecting them mutually by means of tongue feather-feather key.

The advantages of such example of solution according to invention include:
a) considerably higher thermal permeability, than that in the case of any available on the market floor finish, within the range of marketable floor panels, or else solid or multi-layer parquets,
b) bottom of the floor covering (hard panel or heating panel) make up the basis for a multiple use, and as a consequence of this, the floor covering is much more environmentally friendly than other multi-layer parquets (in this case only the surface layer is subjected to replacement),
c) good thermal permeability, which results in the fact, that the whole floor heating system becomes more efficient, therefore its functioning requires lower energy consumption of gas or electric energy for its operation,
d) use of hard panels with various thickness, enables free facing of surface layers having different thickness (wood, granite , ceramics),
e) the floor covering, owing to its structure, can be safely heated up to the temperature significantly higher than in the case of other multi-layer parquets (the range of safe operation varies from -20 ºC up to +40ºC ).

## Claims

1. The multi-layer floor covering, **characterized in that**, it is made up by inseparably joined together: secondarily foamed polyurethane foam (**1**), insulation foil (**2**), thermal insulation (**3**) and hardened layer (**6**), whilst the upper layer (**7**) is fastened to the upper surface of hardened layer (**6**); at the same time one of the wider surfaces of top layer (**7**) is spread with biding material (**8**), which is bilaterally spread over the surface of membrane (**9**) in such a way, that one side of binding material (**8**) is adhering to the bottom surface of surface layer 7, while on the other, external side of membrane (**9**) binding material (**8**) is adhering to the upper surface of hardened layer (**6**).

2. The floor covering, according to Claim 1 **characterized in that**, the feather key (**4**) for the tongue feather (**5**) is situated within the thermal insulation (**3**)

3. The floor covering, according to Claim 1 **characterized in that**, the feather key (**4**) for the tongue feather (**5**) is situated within the hardened layer (**6**).

4. The floor covering, according to Claim 1 **characterized in that**, on the external side of foil (**9**), binding material (**8**) is shielded with a protective paper (**10**), which is removed prior to fitting.

5. The floor covering, according to Claim 1 **characterized in that**, the thermal insulation (**3**) has a milled spaces (**11**), which are housing installation pipes (**12**) with a liquid, and which are resting directly on the holding down foam (**13**), laid directly on the hardened layer (**4**), of the thermal insulation (**3**). Then the heating panel (**1**4) is fixed by means of binding material (**8**) to the upper surface of hardened layer (**4**), and on the top of it, the surface layer (**7**) is fixed by means of binding material (**8**).

6. The floor covering, according to Claim 1 **characterized in that**, the hard panel (**6**) is provided with feather key (**4**) for tongue feather (**5**), heating panel (**14**), surface layer (**7**), as well as pipe connectors (**15**), passing right through the hard panel (**6**) and connecting heating panel (**14**) with the source of heat.

7. The floor covering, according to Claim 1 or 5 or 6 **characterized in that**, the external lateral surfaces of mutually joined: secondarily foamed polyurethane foam (**1**), insulation foil (**2**), thermal insulation (**3**) with feather key (**4**) for tongue feather (**5**), as well as hardened layer (**6**) are covered with water-repellant coating.
